Europäisches Patentamt

European Patent Office

Office européen des brevets

(11) Publication number: **0 469 652 A1**

# EUROPEAN PATENT APPLICATION

(21) Application number: **91201591.4**

(22) Date of filing: **20.06.91**

(51) Int. Cl.5: **A23B 4/10, A23L 1/31**

(30) Priority: **22.06.90 NL 9001439**

(43) Date of publication of application:
**05.02.92 Bulletin 92/06**

(84) Designated Contracting States:
**AT BE CH DE DK ES FR GB GR IT LI LU NL SE**

(71) Applicant: **STORK PROTECON B.V.**
**Industrielaan 63**
**NL-5349 AE Oss(NL)**

(72) Inventor: **Somers, Theodorus Johannes Maria**
**De Sparren 42**
**NL-5427 SH Boekel(NL)**

(74) Representative: **Hoorweg, Petrus Nicolaas et al**
**OCTROOIBUREAU ARNOLD & SIEDSMA**
**Sweelinckplein 1**
**NL-2517 GK The Hague(NL)**

(54) **Meat snack and method for applying a preservative coating around a piece of meat in order to obtain such a snack.**

(57) A meat snack, that is, a piece of meat already made into a form for direct consumption and a method for obtaining such a meat snack, wherein a meat piece is made or formed into the desired snack shape,
- the or each formed piece of meat is subjected to a mechanical treatment to cause proteins to be separated out of the piece of meat itself to form a protein-rich coating on the outside of the piece of meat,
- the or each piece of meat is subjected to a hardening treatment to harden the coating, said coating forming a preservative layer on said pre-formed piece of meat for preserving same for a longer period.

The invention relates to a meat snack, that is, a piece of meat already made into a form for direct consumption.

A protective layer round meat, for instance sausage, increases the storage life thereof. A traditional layer can on the one hand be edible, for instance collagen, or must on the other hand be removed prior to consumption, for instance cellulose.

All traditional layers have the drawback however that they must be applied separately to the meat which, even with the simple form of a sausage string, imposes limitations with respect to the smallest dimensions that can be produced.

The production of "snacks" consisting of randomly shaped small pieces of meat covered with a preservative layer applied from outside has not been found possible up to the present time.

The invention has for its object to provide a snack of random form having a coating for preserving same for a longer period.

The snack according to the invention is distinguished in that the entire surface area of the piece of meat is coated with a layer that is substantially formed by proteins obtained from the piece of meat.

The invention further relates to a method for applying an edible preservative coating round a piece of meat, in particular a piece of meat of small size intended as a snack.

The method according to the invention is distinguished in that a meat piece is made into the desired snack shape,
- the or each piece of meat is subjected to a mechanical treatment to cause proteins to be separated out of the piece of meat itself to form a protein-rich coating on the outside of the piece of meat,
- the or each piece of meat is subjected to a hardening treatment to harden the coating.

According to a first embodiment the protein can be separated by pressing the meat, for instance in the form of meat paste, into the desired snack form.

According to another embodiment the pieces of meat can be combined to a quantity, which quantity is set into movement to cause separation of the proteins out of the pieces of meat. Use is made herein of the per se known phenomenon that, by massaging meat in a quantity of pieces of meat, protein is secreted onto the outside of the meat, appearing as a sticky grease layer. This layer serves as the basis for the preservative coating. By hardening the greasy layer, wherein a cross-linking of proteins takes place, a coating is obtained of sufficient strength and with preservative properties.

The cross-linking of proteins can be obtained by the formation of bridges between the protein molecules. Molecules can be cross-linked without the addition of external cross-linking agents by way of an internal reaction. Some amino acid residues of the protein may be modified to contain an aldehyde group, two of which can undergo an aldol-condensation. As a result a cross-link is formed between two amino acid residues thus forming a bridge between two protein molecules. Additional cross-links convert the separate protein molecules to a network with preservative properties.

The hardening of the coating can advantageously take place according to the invention by treatment with fluid smoke.

The fluid smoke might contain primary and secondary aldehydes as cross-linking agents. Side groups of amino acid residues of two different protein molecules may react with the same aldehyde molecule, thus forming a bridge. Futhermore, the temperature of the smoke can cause a denaturation of the proteins. In denaturation the secondary, tertiary and quarternary structures in the proteins are destroyed by disrupting noncovalent bonds, thus forming an insoluble protein mass.

The coating can then be subjected to an after-drying treatment.

If desired a separate pre-drying can take place directly after the protein separation out of the meat, which pre-drying and after-drying operations can take place effectively by means of conditioned air.

In preference the meat of the piece of meat is subjected to a brining treatment prior to the mechanical treatment for causing separation of proteins.

The brine absorbed into the meat is found to improve the separation of proteins in the mechanical treatment.

The invention is further elucidated on the basis of the appended diagram, wherein the following steps of a method are depicted:

a piece of meat V is cut by means of a cutting means 1 into pieces of the desired shape SV. These pieces are in the form of a snack, that is, they are of a size such that the piece can be consumed by the user without a further cutting operation.

The pieces of meat SV are subsequently brought together and in accordance with a determined weight or volume transferred via the schematically shown weighing device 2 into a container 3 serving as a massage tank.

The massage tank 3 is set into vibration, for instance using eccentric masses 4, such that the pieces of the quantity are moved relative to each other. This massaging action results in the secreting of protein from the pieces of meat, which protein manifests itself as a sticky grease layer on the outside of each piece of meat. Created in this manner round the piece of meat of random shape is a closed, protein-rich layer, which layer is used as the basis for the future preservative layer.

After sufficient massage time the pieces of meat of random shape are ordered such that a drying can be carried out at drying station 5. Between the massaging and the drying the quantity of meat is first brought to a stop to give the protein-rich layer the opportunity to harden somewhat.

Preserving takes place at the drying station 5, where it is shown schematically that with a smoking device 6 and a blower 7 fluid smoke is used to further harden the formed protein layer sufficiently and to convert it to a preservative layer.

If necessary the quantity from the massage tank 3 can first be carried via station 8, wherein, as indicated schematically, the pieces of meat are additionally dried with a blowing device prior to the after-treatment at station 5. Conditioned air serves this purpose, for which the air is brought to temperature and humidity in station 8 by means of the heating and condensation means 9 and 10 respectively, wherein a blowing device 11 provides a rapid drying.

The method is not limited to the above described embodiment. The meat does not for instance have to be cut into pieces but may also be pressed from paste or dough.

It is also possible to effect hardening of the coating by radiation treatment which stimulates cross-linking of proteins in the coating.

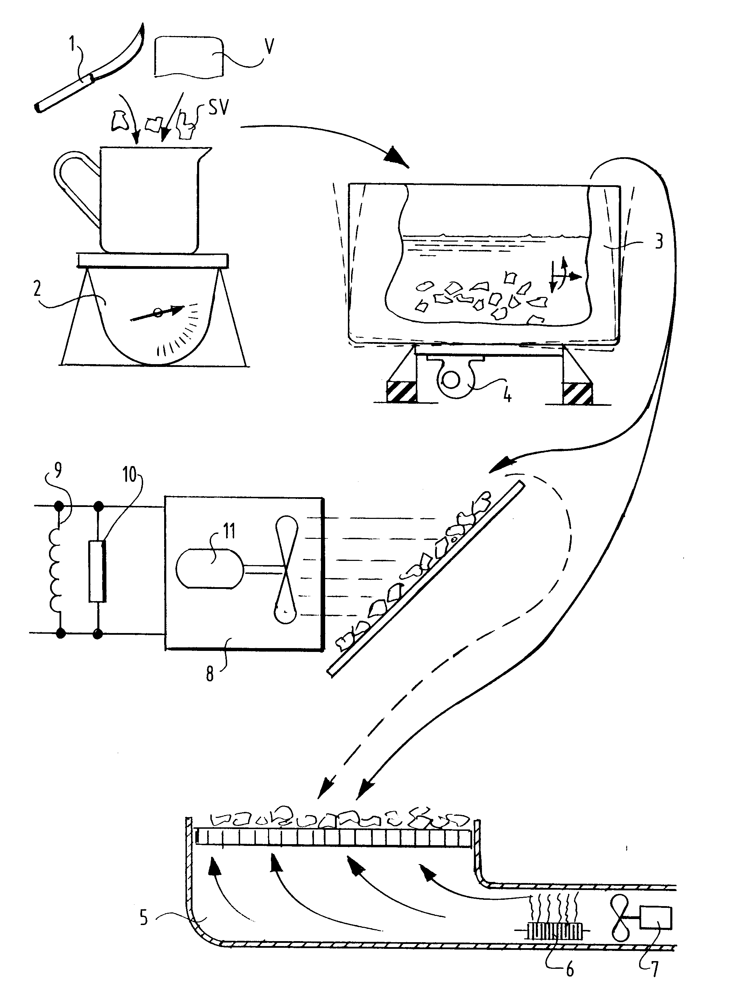

**Claims**

1. Meat snack, that is, a piece of meat already made into a form for direct consumption, **characterized in that** the entire surface area of the piece of meat is coated with a layer that is substantially formed by proteins obtained from the piece of meat.

2. Method for applying an edible preservative coating round a piece of meat, in particular a piece of meat of small size intended as a snack, **characterized in that**

   a meat piece is made into the desired snack shape,

   the or each piece of meat is subjected to a mechanical treatment to cause proteins to be separated out of the piece of meat itself in order to form a protein-rich coating on the outside of the piece of meat,

   the or each piece of meat is subjected to a hardening treatment to harden the coating.

3. Method as claimed in claim 2, **characterized in that** the coating of each piece of meat is subjected to a hardening treatment with fluid smoke.

4. Method as claimed in claim 2, **characterized in that,** prior to hardening, the coating of the or each piece of meat is subjected to a pre-drying treatment.

5. Method as claimed in claim 2, **characterized in that** the coating of the or each piece of meat is subjected to an after-drying treatment after hardening.

6. Method as claimed in claims 4 and 5, **characterized in that** the drying treatment is performed with a conditioned air flow of predetermined humidity and temperature.

7. Method as claimed in claims 2-6, **characterized in that** the meat of the piece of meat is subjected to a brining treatment prior to the mechanical treatment for causing separation of proteins.

European
Patent Office

EUROPEAN SEARCH
REPORT

Application Number

EP 91 20 1591

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 572 896 (HESTER INDUSTRIES)(16-05-1986) * Page 5, lines 19-22; page 6, lines 18-38; page 7, lines 1-16; page 8, lines 14-19; page 9, lines 11-19; page 10, lines 20-32, claims 1,9,10 * – – – | 1,2,4,5,7 | A 23 B 4/10 A 23 L 1/31 |
| X | AU-B-589 583 (HESTER INDUSTRIES)(19-10-1989) * Claims 1,5,6; page 7, lines 5-25; page 13, lines 7-22 * – – – | 1,2,4,5,7 | |
| A | FR-A-2 337 502 (FOLDENAUER EQUIP-MENT)(05-08-1977) – – – – – | | |

TECHNICAL FIELDS
SEARCHED (Int. Cl.5)

A 23 B
A 23 L

The present search report has been drawn up for all claims

| Place of search | Date of completion of search | Examiner |
|---|---|---|
| The Hague | 20 November 91 | GUYON R.H. |

CATEGORY OF CITED DOCUMENTS
X : particularly relevant if taken alone
Y : particularly relevant if combined with another
     document of the same catagory
A : technological background
O : non-written disclosure
P : intermediate document
T : theory or principle underlying the invention

E : earlier patent document, but published on, or after
     the filing date
D : document cited in the application
L : document cited for other reasons
 
& : member of the same patent family, corresponding
     document